# EUROPEAN PATENT APPLICATION

(11) **EP 4 817 491 A1**
(43) Date of publication of application: **07.10.2026**
(21) Application number: 24896296.1
(22) Date of filing: 15.11.2024
(51) Int. Cl.: A47L 11/40

(54) **TRANSMITTING DEVICE, RECEIVING DEVICE, ORIENTATION ADJUSTING METHOD, SELF-TRAVELING DEVICE, MAINTENANCE STATION AND CLEANING SYSTEM**

(30) Priority: 01.12.2023 CN 202311638837
(71) Applicant: Beijing Roborock Technology Co., Ltd., Beijing 102206 (CN)
(72) Inventor: LIU, Dan, Beijing 102206 (CN); WU, Guangchuan, Beijing 102206 (CN)
(74) Representative: Weickmann & Weickmann PartmbB
(86) International application number: PCT/CN2024/132391
(87) International publication number: WO 2025/113205

(57) **Abstract**

The present disclosure provides a transmitting device, a receiving device, an orientation adjusting method, a self-traveling device, a maintenance station and a cleaning system. The transmitting device is configured to be assembled on the maintenance station and transmit a radio frequency signal. The transmitting device comprises: a first transmitting assembly, comprising a first transmitting source and a first optical assembly, the first optical assembly being configured to enable the first transmitting source to have a radio frequency signal of a first included angle on a first surface; and a second transmitting assembly, comprising a second transmitting source and a second optical assembly, the second optical assembly being configured to enable the second transmitting source to have a radio frequency signal of a second included angle on a second surface, wherein the first surface is approximately perpendicular to the second surface.

## Description

### CROSS-REFERENCE TO RELATED APPLICATION

The present disclosure claims priority to Chinese Patent Application No. 202311638837.4 filed on December 1, 2023, which is incorporated herein by reference in its entirety as a part of the present disclosure.

### TECHNICAL FIELD

The present disclosure relates to the technical field of robots, and in particular, to an emitting apparatus, a receiving apparatus, an orientation adjustment method, a self-propelled device, a maintenance station, and a cleaning system.

### BACKGROUND ART

With the development of technologies, service robots are involved in all aspects of life, such as cleaning robots, food delivery robots, and commercial robots. All types of robots involve functional requirements for autonomous charging, and some cleaning robots also involve additional functions such as regular garbage collection, cloth cleaning, and water replenishment. The above functions require that robots can accurately navigate and return to their original positions.

In the related art, the return-to-dock solution of the robot exhibits a relatively large error, and the robot cannot accurately adjust its behavior to the center for charging based on the signal direction. Therefore, in actual situations, the robot often returns to the dock in an eccentric state, which may cause problems such as charging failure and air leakage during dust collection.

### SUMMARY OF THE INVENTION

An objective of the present disclosure is to provide an emitting apparatus, a receiving apparatus, an orientation adjustment method, a self-propelled device, a maintenance station, and a cleaning system, which can solve at least one of the technical problems mentioned above. Specific solutions are as follows.

According to one embodiment of the present disclosure, in one aspect, the present disclosure provides an emitting apparatus configured to be assembled to a maintenance station and emit a radio frequency signal. The emitting apparatus includes: a first emission assembly, the first emission assembly including: a first emitting source and a first optical assembly, and the first optical assembly being configured to enable the first emitting source to have a radio frequency signal with a first included angle on a first surface; and a second emission assembly, the second emission assembly including: a second emitting source and a second optical assembly, and the second optical assembly being configured to enable the second emitting source to have a radio frequency signal with a second included angle on a second surface; where the first surface is substantially perpendicular to the second surface.

In some embodiments, the first optical assembly includes: a first lens. The first lens is provided with a first incident surface and a first exit surface. The first incident surface is a surface, close to the first emitting source, of the first lens, and the first exit surface is a surface, away from the first emitting source, of the first lens. The first lens is configured to increase a divergence angle, on the first surface, of a radio frequency signal emitted by the first emitting source.

In some embodiments, the first incident surface is provided with a first protruding part, the first protruding part is of a strip-shaped structure, and a length direction of the strip-shaped structure is substantially perpendicular to the first surface.

In some embodiments, the first protruding part is of a semi-circular structure, and a height direction of the semi-circular structure is consistent with the length direction of the strip-shaped structure.

In some embodiments, a plurality of first protruding parts are provided, and the plurality of first protruding parts are substantially distributed in parallel.

In some embodiments, the first optical assembly further includes: a second lens. The second lens is disposed between the first emitting source and the first lens, and the second lens is configured to focus the radio frequency signal emitted by the first emitting source on the first incident surface.

In some embodiments, the second lens is a focusing lens, and the focusing lens is configured to compress a divergence angle of the first emission assembly to a first angle range.

In some embodiments, the second optical assembly includes: a third lens. The third lens is provided with a second incident surface and a second exit surface. The second incident surface is a surface, close to the second emitting source, of the third lens, and the second exit surface is a surface, away from the second emitting source, of the third lens. The third lens is configured to increase a divergence angle, on the second surface, of a radio frequency signal emitted by the second emitting source.

In some embodiments, the second incident surface is provided with a second protruding part, the second protruding part is of a strip-shaped structure, and a length direction of the strip-shaped structure is substantially perpendicular to the second surface.

In some embodiments, the second protruding part is of a semi-circular structure, and a height direction of the semi-circular structure is consistent with the length direction of the strip-shaped structure.

In some embodiments, a plurality of second protruding parts are provided, and the plurality of second protruding parts are substantially distributed in parallel.

In some embodiments, the second optical assembly further includes: a fourth lens. The fourth lens is disposed between the second emitting source and the third lens, and the fourth lens is configured to diffuse the radio frequency signal emitted by the second emitting source.

In some embodiments, the fourth lens is a diffusion lens, and the diffusion lens is configured to diffuse a divergence angle of the second emission assembly to a second angle range.

In some embodiments, an included angle between the third lens and a center line of an emitted light beam of the second emitting source is 60° to 90°.

In some embodiments, the first surface is substantially a vertical surface; and the second surface is substantially a horizontal surface.

In some embodiments, a size of the first included angle is 90° to 180°; and a size of the second included angle is 90° to 180°.

In some embodiments, the first emitting source has a radio frequency signal with a third included angle on the second surface, and the third included angle is less than the first included angle.

In some embodiments, the second emitting source has a radio frequency signal with a fourth included angle on the first surface, and the fourth included angle is less than the second included angle.

In some embodiments, the first emitting source is a vertical-cavity surface-emitting laser; and/or the second emitting source is a vertical-cavity surface-emitting laser.

According to one embodiment of the present disclosure, in another aspect, the present disclosure provides a receiving apparatus configured to be assembled to a self-propelled device. The receiving apparatus is configured to receive a radio frequency signal of the emitting apparatus according to any one of the above technical solutions.

According to one embodiment of the present disclosure, in yet another aspect, the present disclosure provides an orientation adjustment method. By using the emitting apparatus according to any one of the above technical solutions and the receiving apparatus according to any one of the above technical solutions, a self-propelled device is controlled to adjust an orientation based on a state of the receiving apparatus receiving a radio frequency signal.

In some embodiments, the receiving apparatus includes: a first receiver, the first receiver being configured to receive radio frequency signals of a first emission assembly and a second emission assembly; and a second receiver, the second receiver being configured to receive the radio frequency signals of the first emission assembly and the second emission assembly. The orientation adjustment method includes: controlling, in response to the first receiver receiving the radio frequency signals of the first emission assembly and the second emission assembly and the second receiver receiving the radio frequency signals of the first emission assembly and the second emission assembly, the self-propelled device to move toward a maintenance station along a straight line.

In some embodiments, the orientation adjustment method further includes: controlling, in response to the first receiver receiving the radio frequency signals of the first emission assembly and the second emission assembly and the second receiver receiving the radio frequency signal of the second emission assembly, the self-propelled device to move toward a direction of the first receiver.

In some embodiments, the orientation adjustment method further includes: controlling, in response to the first receiver receiving the radio frequency signal of the second emission assembly and the second receiver receiving the radio frequency signals of the first emission assembly and the second emission assembly, the self-propelled device to move toward a direction of the second receiver.

In some embodiments, the orientation adjustment method further includes: controlling, in response to the first receiver not receiving the radio frequency signal of the second emission assembly and the second receiver not receiving the radio frequency signal of the second emission assembly, the self-propelled device to adjust the orientation and search for the radio frequency signal of the second emission assembly.

In some embodiments, the first receiver and the second receiver are disposed in a horizontal direction.

According to one embodiment of the present disclosure, in yet another aspect, the present disclosure provides a self-propelled device, which includes: the receiving apparatus according to any one of the above technical solutions.

According to one embodiment of the present disclosure, in yet another aspect, the present disclosure provides a maintenance station, which includes: the emitting apparatus according to any one of the above technical solutions.

According to one embodiment of the present disclosure, in yet another aspect, the present disclosure provides an automatic cleaning system, which includes: the self-propelled device according to any one of the above technical solutions and the maintenance station according to any one of the above technical solutions.

Compared with the prior art, the above solutions of the embodiments of the present disclosure provide at least the following beneficial effects.

The emitting apparatus of the present disclosure achieves one horizontal light field with a wide divergence angle and one vertical light field with a narrow divergence angle by means of two sets of emitting apparatuses, i.e., the first emission assembly and the second emission assembly. Therefore, the self-propelled device can quickly locate the orientation of the maintenance station by following the horizontal light field with a wide divergence angle, and then achieve high-precision return-to-dock by following the vertical light field with a narrow divergence angle.

### BRIEF DESCRIPTION OF THE DRAWINGS

FIG. 1 shows a schematic diagram of a self-service return-to-dock system in the related art.
FIG. 2 shows a schematic diagram of a state of a self-service return-to-dock system in the related art.
FIG. 3 shows a schematic structural diagram of a self-propelled device according to some embodiments of the present disclosure.
FIG. 4 shows a schematic diagram of a scenario after a self-propelled device returns to a maintenance station according to some embodiments of the present disclosure.
FIG. 5 shows a schematic diagram of an emitting apparatus according to some embodiments of the present disclosure.
FIG. 6 shows a schematic structural diagram of an emitting apparatus according to some embodiments of the present disclosure.
FIG. 7 shows a schematic diagram of a first lens according to some embodiments of the present disclosure.
FIG. 8 shows a schematic diagram of an optical path of a first lens according to some embodiments of the present disclosure.
FIG. 9 shows a schematic diagram of an optical path of a second lens according to some embodiments of the present disclosure.
FIG. 10 shows a schematic diagram of an optical path of an emitting apparatus according to some embodiments of the present disclosure.
FIG. 11 shows a schematic diagram of an emitting apparatus according to some other embodiments of the present disclosure.
FIG. 12 shows a flowchart of an orientation adjustment method for a self-propelled device according to some embodiments of the present disclosure.

### Reference numerals:

10: emitting apparatus;
100: first emission assembly; 110: first emitting source; 120: first optical assembly; 121: first lens; 1211: first protruding part; 122: second lens;
200: second emission assembly; 210: second emitting source; 220: second optical assembly; 221: third lens; 222: fourth lens.
600: self-propelled device; 700: maintenance station.
IR1: first infrared emitter; IR2: second infrared emitter; PT1: first infrared receiver; PT2: second infrared receiver.

### DETAILED DESCRIPTION

For clearer descriptions of the objectives, technical solutions, and advantages of the present disclosure, the present disclosure is further described in detail hereinafter with reference to the drawings. Apparently, the described embodiments are merely some embodiments of the present disclosure, rather than all of the embodiments. Based on the embodiments in the present disclosure, all other embodiments obtained by those of ordinary skill in the art without creative efforts shall fall within the scope of protection of the present disclosure.

The terms used in the embodiments of the present disclosure are for the purpose of describing particular embodiments only and are not intended to be limiting to the present disclosure. As used in the embodiments and the appended claims of the present disclosure, the singular forms "a", "an", and "the" are intended to include the plural forms as well, unless the context clearly indicates otherwise, and "a plurality of" generally includes at least two.

It should be understood that the term "and/or" as used herein is merely a description of an association relationship between associated objects, indicating that three possible relationships may exist. For example, "A and/or B" can represent: the presence of A alone, the simultaneous presence of A and B, and the presence of B alone. In addition, the character "/" herein generally indicates an "or" relationship between the associated objects before and after.

It should be understood that although the terms "first", "second", "third", and the like may be used in the embodiments of the present disclosure to describe the structures, such structures should not be limited to these terms. These terms are only used to distinguish different structures. For example, a first assembly may also be referred to as a second assembly, and similarly, a second assembly may also be referred to as a first assembly, without departing from the scope of the embodiments of the present disclosure. Depending on the context, the term "if" as used herein may be interpreted as "when", or "in response to determining", or "in response to detecting". Similarly, depending on the context, the phrases "if it is determined" or "if (a stated condition or event) is detected" may be interpreted as "when it is determined" or "in response to determining", or "when (a stated condition or event) is detected" or "in response to detecting (a stated condition or event)".

It should be further noted that the terms "comprise", "include", or any other variants thereof are intended to encompass a non-exclusive inclusion, such that a commodity or an apparatus including a list of elements includes not only those elements, but also other elements not explicitly listed or inherent to such commodity or apparatus. Without further limitation, an element defined by the phrase "comprising a/an..." or "including a/an..." does not exclude the presence of other identical elements in the commodity or apparatus including the element.

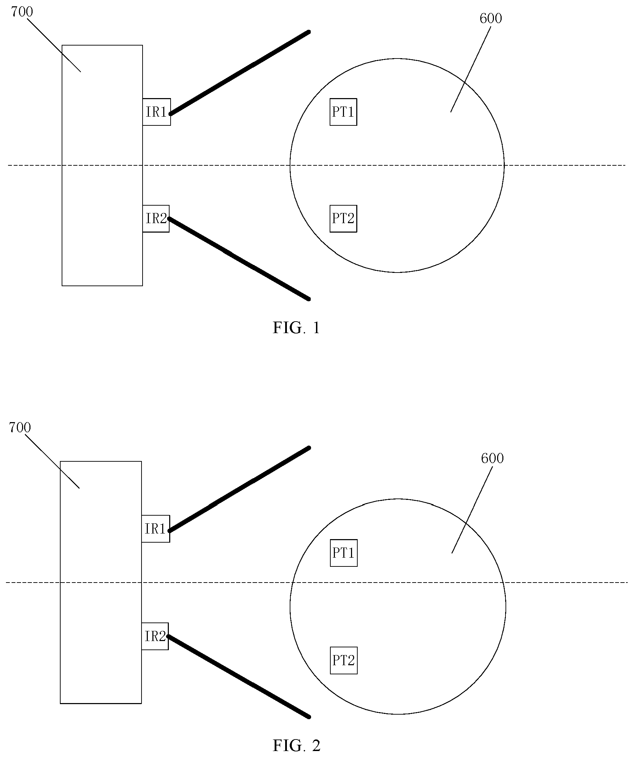

FIG. 1 shows a schematic diagram of a self-service return-to-dock system in the related art. FIG. 2 shows a schematic diagram of a state of a self-service return-to-dock system in the related art. As shown in FIGs. 1 and 2, in the related art, a first infrared emitter IR1 and a second infrared emitter IR2 are disposed on a maintenance station (which may also be referred to as a "dock"); a first infrared receiver PT1 and a second infrared receiver PT2 are disposed on a self-propelled device. When the first infrared receiver PT1 stably receives a signal of the first infrared emitter IR1, and the second infrared receiver PT2 stably receives a signal of the second infrared emitter IR2, it indicates that the center of the self-propelled device coincides with the center of the maintenance station, such that the robot can move forward in a straight line until the robot reaches its position. If the second infrared receiver PT2 can receive the signal of the second infrared emitter IR2, but the first infrared receiver PT1 cannot receive the signal of the first infrared emitter IR1, it indicates that the self-propelled device is deviated to the side of the second infrared emitter IR2. In this case, the behavior of the robot needs to be adjusted to turn to the first infrared emitter IR1, until the first infrared receiver PT1 and the second infrared receiver PT2 can stably receive the first infrared emitter IR1 and the second infrared emitter IR2.

In the related art, to ensure that the self-propelled device can receive signals in a horizontal range of 180°, the divergence angles of the first infrared emitter IR1 and the second infrared emitter IR2 are generally greater than or equal to 90°. This results in a wide coverage range of optical signals, making it impossible for the self-propelled device to accurately adjust its behavior for charging at the maintenance station based on the signal direction. As shown in FIG. 2, it is theoretically necessary to ensure that a center line of the maintenance station coincides with a center line of the robot based on an alignment state. However, since optical signal coverage patterns of the first infrared emitter IR1 and the second infrared emitter IR2 have a certain width, and the robot also receives at a certain angle, in actual situations, the robot often returns to the maintenance station in an eccentric state, which may cause problems such as charging failure and air leakage during dust collection.

To solve at least one of the technical problems mentioned above, the present disclosure provides an emitting apparatus 10, a receiving apparatus, an orientation adjustment method, a self-propelled device 600, a maintenance station 700, and an automatic cleaning system. The emitting apparatus 10 is configured to be assembled to a maintenance station and emit a radio frequency signal. The emitting apparatus may include: a first emission assembly 100, where the first emission assembly 100 includes a first emitting source 110 and a first optical assembly 120, and the first optical assembly 120 is configured to enable the first emitting source 110 to only have a radio frequency signal with a first included angle on a first surface; and a second emission assembly 200, where the second emission assembly 200 includes a second emitting source 210 and a second optical assembly 220, and the second optical assembly 220 is configured to enable the second emitting source 210 to have a radio frequency signal with a second included angle on a second surface; where the first surface is substantially perpendicular to the second surface. The emitting apparatus 10 of the present disclosure achieves one horizontal light field with a wide divergence angle and one vertical light field with a narrow divergence angle by means of two sets of emitting apparatuses 10, i.e., the first emission assembly 100 and the second emission assembly 200. Therefore, the self-propelled device 600 can quickly locate the orientation of the maintenance station by following the horizontal light field with a wide divergence angle, and then achieve high-precision return-to-dock by following the vertical light field with a narrow divergence angle. In the emitting apparatus 10 of the present disclosure, by enabling the first emission assembly 100 to only have the radio frequency signal with the first included angle on the first surface, a radio frequency signal with a very small divergence angle in the horizontal direction is formed, thereby achieving high-precision return-to-dock.

The embodiments of the present disclosure are described in detail hereinafter with reference to the drawings.

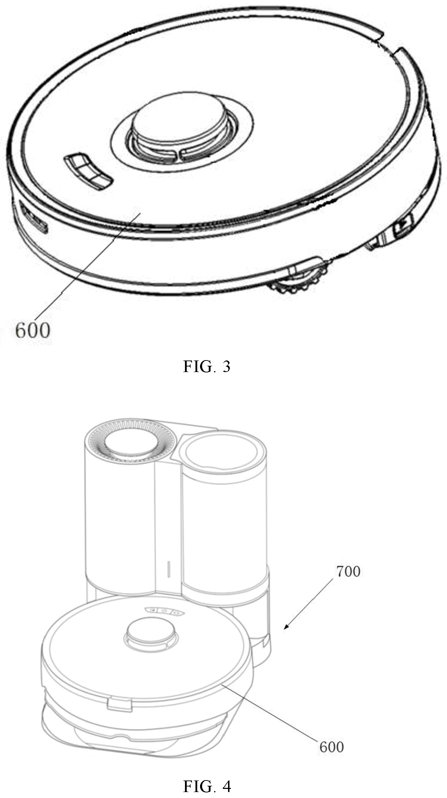

FIG. 3 is a schematic structural diagram of a self-propelled device 600 according to some embodiments of the present disclosure. As shown in FIG. 3, the self-propelled device 600 is a self-propelled cleaning device, such as a sweeping robot, and may include a steering wheel and a driving wheel. Under the action of the steering wheel and the driving wheel, the self-propelled device 600 may move on a supporting surface, such as the ground. Optionally, the self-propelled device 600 may move based on a preset route, or in a specific situation, for example, when the self-propelled device 600 itself is insufficient in power, when a dust box of the self-propelled device 600 itself is fully loaded with garbage, and when the cleaning work is completed. The self-propelled device 600 may move back to the maintenance station to be charged or to unload the garbage into a dust collection container of the maintenance station.

The self-propelled device 600 may further include a charging electrode configured to be electrically connected to the maintenance station for charging after the self-propelled device 600 returns to the maintenance station. In some embodiments, the charging electrode is disposed on the bottom surface of the self-propelled device 600, and the number of the charging electrodes is, for example, two, which are respectively disposed on two sides of the steering wheel. Those skilled in the art can understand that the above description is only an example of the number and arrangement position of the charging electrodes, and the present disclosure does not specifically limit the number and arrangement position of the charging electrodes.

The self-propelled device 600 may further include a cleaning assembly, such as a dry cleaning assembly. The cleaning assembly is configured to clean at least a part of the supporting surface when the self-propelled device 600 moves on the supporting surface, such as the ground. In some embodiments, the cleaning assembly may be disposed between two driving wheels.

FIG. 4 is a schematic diagram of a scenario after a self-propelled device 600 returns to a maintenance station according to some embodiments of the present disclosure. In some embodiments, the maintenance station 700 integrates a charging dock and a dust collection dock, and is configured to provide functions such as energy supply, garbage collection, and mop cleaning for the self-propelled device 600. In some embodiments, the maintenance station 700 includes a maintenance station base and a maintenance station main body. The maintenance station 700 main body may be configured to charge the self-propelled device 600 and collect garbage in a dust collection box of the self-propelled device 600, and the maintenance station main body is disposed on the maintenance station base. The maintenance station main body includes a dust collection container and a dust collection fan. The dust collection container is, for example, in a cylindrical shape, and is configured to collect the garbage in the dust collection box of the self-propelled device 600. The dust collection fan is connected to an air outlet of the dust collection container to provide power for collecting the garbage in the dust collection box of the self-propelled device 600 into the dust collection container.

The maintenance station 700 includes a charging connector and a dust suction inlet. The charging connector is configured to supply energy to the self-propelled device 600, the dust suction inlet is configured to be docked with a dust outlet of the self-propelled device 600, and the garbage in the dust collection box of the self-propelled device 600 enters the dust collection container of the maintenance station main body through the dust suction inlet. The charging connector is disposed on the maintenance station main body, and the dust suction inlet is disposed on the maintenance station base.

As shown in FIG. 4, after the self-propelled device 600, such as a sweeping robot, completes cleaning and returns to the maintenance station 700, the self-propelled device 600 moves to the maintenance station base, such that the charging electrode on the self-propelled device 600 is electrically connected to the charging connector to charge the self-propelled device 600, and the dust outlet of the self-propelled device 600 is docked with the dust suction inlet of the maintenance station 700, so as to transfer the garbage in the dust collection box of the self-propelled device 600 to the dust collection container of the maintenance station 700.

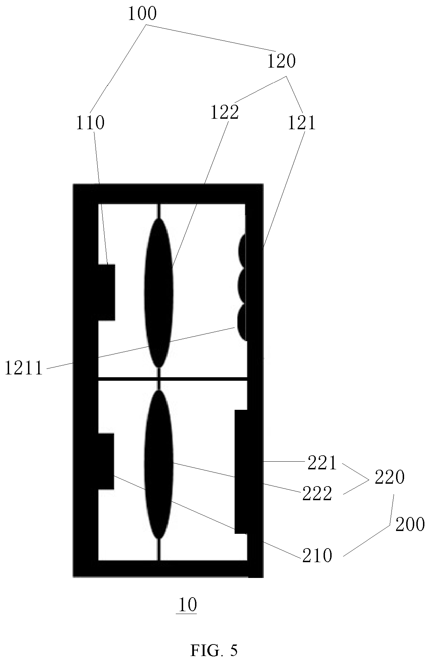

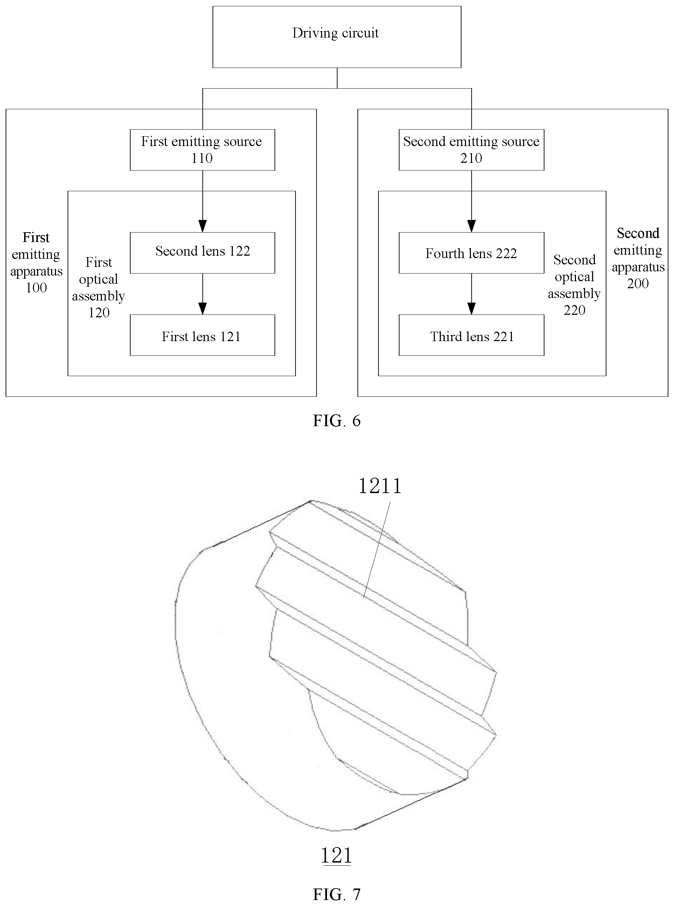

FIG. 5 shows a schematic diagram of an emitting apparatus 10 according to some embodiments of the present disclosure. FIG. 6 shows a schematic structural diagram of an emitting apparatus according to some embodiments of the present disclosure. As shown in FIGs. 5 and 6, according to one embodiment of the present disclosure, the emitting apparatus 10 may be applied to a maintenance station 700, a charging dock, a dust collection dock, a cloth cleaning dock, and other functional auxiliary robot apparatuses. The following is described by taking the maintenance station 700 as an example, but is not limited thereto. In some embodiments, the emitting apparatus 10 is configured to be assembled to the maintenance station 700 and emit a radio frequency signal. The emitting apparatus 10 may include: a first emission assembly 100 and a second emission assembly 200, where the first emission assembly 100 may include: a first emitting source 110 and a first optical assembly 120, and the first optical assembly 120 is configured to enable the first emitting source 110 to have a radio frequency signal with a first included angle on a first surface; and the second emission assembly 200 may include: a second emitting source 210 and a second optical assembly 220, and the second optical assembly 220 is configured to enable the second emitting source 210 to have a radio frequency signal with a second included angle on a second surface; where the first surface is substantially perpendicular to the second surface. According to the emitting apparatus 10 provided in the embodiments of the present disclosure, by means of two sets of emitting apparatuses, i.e., the first emission assembly 100 and the second emission assembly 200, one of the emitting apparatuses forms a horizontal light field with a wide divergence angle and the other of the emitting apparatuses forms a vertical light field with a narrow divergence angle. Therefore, the self-propelled device 600 can quickly locate the orientation of the maintenance station 700 through the horizontal light field with a wide divergence angle, and then achieve high-precision return-to-dock through the vertical light field with a narrow divergence angle.

In some embodiments, a size of the first included angle is 90° to 180°; and a size of the second included angle is 90° to 180°. It should be noted that the radio frequency signal emitted by the first emission assembly 100 can form a divergence signal directly forward on the first surface, for example, on a vertical surface; and the radio frequency signal emitted by the second emission assembly 200 forms a divergence signal directly forward on the second surface, for example, on a horizontal surface, where the first surface is substantially perpendicular to the second surface, and the first surface and the second surface may be a non-vertical surface and a non-horizontal surface. The radio frequency signals emitted by the first emission assembly 100 and the second emission assembly 200 diverge forward in a substantially vertical cross pattern. That is, the radio frequency signal emitted by the first emission assembly 100 is a vertical light field with a narrow divergence angle in the horizontal direction, which is almost a straight line in the vertical direction, while the divergence angle in the horizontal direction is as small as possible; the radio frequency signal emitted by the second emission assembly 200 is a horizontal light field with a wide divergence angle, exhibiting a certain divergence angle in the vertical direction and a relatively wide divergence angle in the horizontal direction, for example, close to 180 degrees, so as to facilitate the dock locating of the self-propelled device 600. The emitting apparatus 10 further includes a driving circuit unit configured to provide an appropriate driving voltage and current to enable the first emitting source 110 and the second emitting source 210 to perform photoelectric conversion. The light-emitting intensity of the emitting source is linearly related to the driving current. Therefore, the response distance between the emitting apparatus and the receiving apparatus can be effectively controlled by controlling the driving current, so as to achieve the function of the self-propelled device 600 sensing the maintenance station 700 from a long distance.

In some embodiments, the first emitting source 110 may be an infrared laser emitter or the like. For example, the first emitting source 110 is a vertical-cavity surface-emitting laser (vertical-cavity surface-emitting laser, VCSEL). By combining the vertical-cavity surface-emitting laser with the first optical assembly 120 for shaping, a vertical light field with a narrow divergence angle in the horizontal direction is generated, which meets the accurate identification requirements of the self-propelled device 600, thereby achieving quick and accurate return-to-dock. The vertical light field with a narrow divergence angle can also avoid stray light caused by the interference between the radio frequency signal emitted by the first emitting source 110 and the structural support of the self-propelled device 600, such that the distribution edge of the light field is clear, thereby ensuring a smooth return-to-dock behavior of the machine and achieving accurate return-to-dock. In some embodiments, a wavelength range of the radio frequency signal emitted by the first emitting source 110 is 800 nm to 1000 nm. The wavelength range can avoid the interference of sunlight, thereby achieving accurate return-to-dock. Specifically, the wavelength of the radio frequency signal emitted by the first emitting source 110 is 850 nm or 940 nm. An infrared laser with a wavelength of 850 nm and 940 nm can avoid the interference of sunlight (visible light) to the greatest extent.

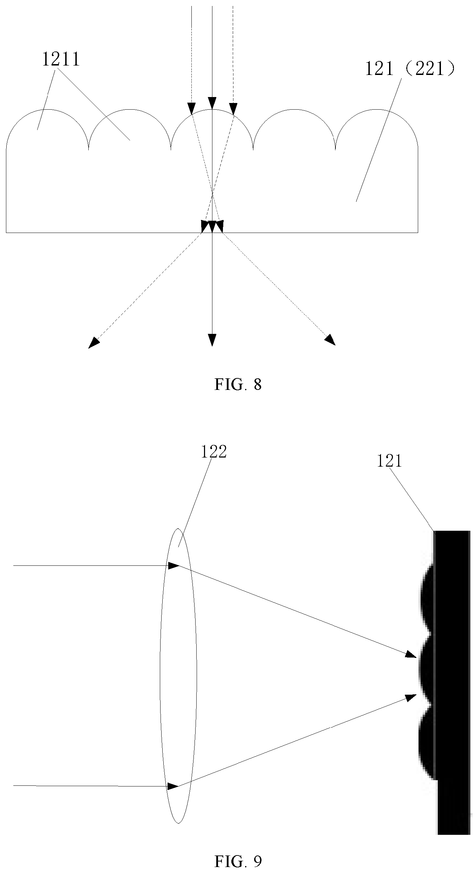

FIG. 7 shows a schematic diagram of a first lens according to some embodiments of the present disclosure. FIG. 8 shows a schematic diagram of an optical path of a first lens according to some embodiments of the present disclosure. The three line shapes in FIG. 8 represent three radio frequency signals that pass through the first lens. As shown in FIGs. 7 and 8, in some embodiments, the first optical assembly 120 may include: a first lens 121. The first lens 121 is provided with a first incident surface and a first exit surface. The first incident surface is a surface, close to the first emitting source 110, of the first lens 121, and the first exit surface is a surface, away from the first emitting source 110, of the first lens 121. The first lens 121 is configured to increase the divergence angle, on the first surface, of the radio frequency signal emitted by the first emitting source 110. In some embodiments, the first incident surface is provided with a first protruding part 1211, the first protruding part 1211 is of a strip-shaped structure, and a length direction of the strip-shaped structure is substantially perpendicular to the first surface. The first protruding part 1211 protrudes in a direction away from the first exit surface. According to the emitting apparatus 10 of the present disclosure, by providing the first lens 121, the radio frequency signal emitted by the first emitting source 110 forms a vertical light field with a narrow divergence angle by means of the first protruding part 1211. When the radio frequency signal emitted by the first emitting source 110 passes through the first lens 121, the radio frequency signal diverges in the vertical direction, and the divergence in the horizontal direction is extremely small, thereby forming a vertical light field with a narrow divergence angle in the horizontal direction. The first protruding part 1211 may be a strip-shaped protrusion, which is evenly distributed on the first incident surface. For example, the first protruding part 1211 may be a semi-circular protrusion, an arc-shaped protrusion, a prismatic protrusion, or the like. Specifically, the first protruding part 1211 is of a semi-circular structure, and a height direction of the semi-circular structure is consistent with the length direction of the strip-shaped structure. In some embodiments, a plurality of first protruding parts 1211 are provided, and the plurality of first protruding parts 1211 are substantially distributed in parallel.

FIG. 9 shows a schematic diagram of an optical path of a second lens according to some embodiments of the present disclosure. As shown in FIG. 9, in some embodiments, the first optical assembly 120 may further include a second lens 122, the second lens 122 is disposed between the first emitting source 110 and the first lens 121, and the second lens 122 is configured to focus the radio frequency signal emitted by the first emitting source 110 on the first incident surface. For example, the second lens 121 may be a convex lens, a focusing lens, or the like, and the radio frequency signal emitted by the second emitting source 110 is focused by the second lens 121. Specifically, the second lens 122 is a focusing lens, and the focusing lens is configured to compress the divergence angle of the first emission assembly 100 to a first angle range. Optionally, the radio frequency signal emitted by the first emitting source 110 is a conical beam with a divergence angle of 10° to 15° and a conical beam with a first angle in a range of 0.1° to 2.5°. For example, the divergence angle of the radio frequency signal emitted by the first emitting source 110 is a conical beam of 10°, and when the radio frequency signal is focused by the second lens 121 and enters the first incident surface, the divergence angle of the radio frequency signal is a conical beam of 1°. Through the focusing of the second lens 122, the divergence angle of the radio frequency signal is reduced as a whole. Then, when the radio frequency signal passes through the first protruding part 1211 of the strip-shaped structure, the divergence angle in the horizontal direction is almost unchanged, and the divergence angle in the vertical direction is increased, thereby forming a vertical light field with a narrow divergence angle in the horizontal direction. That is, the first emitting source 110 has a radio frequency signal with a third included angle on the second surface, and the third included angle is far less than the first included angle. It should be noted that the larger the first included angle is, the more ideal it is, and the smaller the third included angle is, the more ideal it is. As shown in FIG. 8, the strip-shaped first protruding part 1211 extends in the horizontal direction, and the radio frequency signal emitted by the first emitting source 110 is refracted by the first lens 121, such that the radio frequency signal emitted by the first emitting source 110 does not diverge in the horizontal direction, but only diverges in the vertical direction.

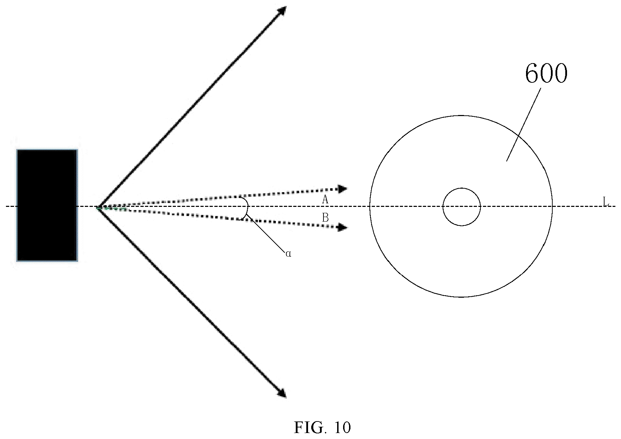

FIG. 10 shows a schematic diagram of an optical path of an emitting apparatus 10 according to some embodiments of the present disclosure. FIG. 10 is a top view showing that an emitting apparatus emits a radio frequency signal in an operating state. A dashed line with an arrow is a radio frequency signal emitted by the first emission assembly, and a solid line with an arrow is a radio frequency signal emitted by the second emission assembly, where region A is a right light field, region B is a left square, a dashed line L is a center line, and α is a first angle. As shown in FIG. 10, with the horizontal surface as a reference, due to the divergence of the angles, the spacing between the radio frequency signals emitted by the first emission assembly 100 (i.e., the vertical light field with a narrow divergence angle) gradually widens with the increase of the emission distance. Taking the straight line perpendicular to the center of the light source directly in front as the center line, the distances from the boundaries of the left light field and the right light field to the center line are shown in the following table:

| Distance between self-propelled device 600 and maintenance station 700/cm | Straight-line distance to center line | |
|---|---|---|
| | Left light field | Right light field |
| 5 | -0.14 | 0.14 |
| 10 | -0.23 | 0.23 |
| 20 | -0.41 | 0.41 |
| 30 | -0.58 | 0.58 |
| 40 | -0.75 | 0.75 |
| 50 | -0.93 | 0.93 |
| 60 | -1.10 | 1.10 |
| 70 | -1.28 | 1.28 |
| 80 | -1.45 | 1.45 |
| 90 | -1.63 | 1.63 |
| 100 | -1.80 | 1.80 |

It can be seen from the above table that the closer the distance between the self-propelled device 600 and the maintenance station 700 is, the shorter the straight-line distance from the boundaries of the left light field and the right light field to the center line is. That is, during the process of the self-propelled device 600 returning to the dock, since the distance to the maintenance station 700 is closer, the error of returning to the dock is smaller, thereby enabling the achievement of a more accurate return-to-dock.

In some embodiments, as shown in FIG. 5, the second emitting source 210 may be an infrared laser emitter or the like. For example, the second emitting source 210 is a vertical-cavity surface-emitting laser. By combining the vertical-cavity surface-emitting laser with the second optical assembly 220 for shaping, a wide divergent light field in the horizontal direction is generated, which meets the identification requirements of the self-propelled device 600. This achieves the large-angle emission signal coverage, thereby enabling the self-propelled device 600 to quickly capture a return-to-dock signal. In some embodiments, a wavelength range of the radio frequency signal emitted by the second emitting source 210 is 800 nm to 1000 nm. The wavelength range can avoid the interference of sunlight, thereby achieving accurate dock locating. Specifically, the wavelength of the radio frequency signal emitted by the second emitting source 210 is 850 nm or 940 nm. A laser, an infrared ray, or the like with a center wavelength of 850 nm and 940 nm can avoid the interference of sunlight to the greatest extent.

In the present disclosure, by combining the first emission assembly and the second emission assembly, the light field distribution in which the wide horizontal light field cooperates with the narrow vertical light field is formed, ensuring that the self-propelled device 600 can simultaneously achieve a high-efficiency and high-accuracy identification and return-to-dock, and complete functions such as charging, dust collection, and water replenishment.

In some embodiments, as shown in FIG. 5, the second optical assembly 220 may include a third lens 221. The third lens 221 is provided with a second incident surface and a second exit surface. The second incident surface is a surface, close to the second emitting source 210, of the third lens 221, and the second exit surface is a surface, away from the second emitting source 210, of the third lens 221. The third lens is configured to increase the divergence angle, on the second surface, of the radio frequency signal emitted by the second emitting source. In some embodiments, the second incident surface is provided with a second protruding part, the second protruding part is of a strip-shaped structure, and a length direction of the strip-shaped structure is substantially perpendicular to the second surface. The second protruding part protrudes in a direction away from the second exit surface. According to the emitting apparatus 10 of the present disclosure, by providing the third lens 221, the radio frequency signal emitted by the second emitting source 210 forms a horizontal light field with a wide divergence angle by means of the second protruding part. That is, the second emitting source 210 has a radio frequency signal with a fourth included angle on the first surface, and the fourth included angle is far less than the second included angle. It should be noted that the larger the second included angle is, the more ideal it is, and the smaller the fourth included angle is, the more ideal it is. When the radio frequency signal emitted by the second emitting source 210 passes through the third lens 221, the radio frequency signal diverges in the horizontal direction, and the divergence angle in the vertical direction is almost unchanged, thereby forming a horizontal light field with a wide divergence angle. The second protruding part may be a strip-shaped protrusion, which is evenly distributed on the second incident surface. For example, the second protruding part may be a semi-circular protrusion, an arc-shaped protrusion, a prismatic protrusion, or the like. Specifically, the second protruding part is of a semi-circular structure, and a height direction of the semi-circular structure is consistent with the length direction of the strip-shaped structure. In some embodiments, a plurality of second protruding parts are provided, and the plurality of second protruding parts are substantially distributed in parallel. In some embodiments, the second optical assembly 220 may further include: a fourth lens 222. The fourth lens 222 is disposed between the second emitting source 210 and the third lens 221, and the fourth lens 222 is configured to diffuse the radio frequency signal emitted by the second emitting source 210. For example, the fourth lens 222 may be a concave lens, a diffusion lens, or the like. The radio frequency signal emitted by the second emitting source 110 is diffused by the fourth lens 222, thereby increasing the divergence angle of the radio frequency signal, and increasing the positioning range of the second emission assembly 200. Specifically, the fourth lens 222 is a diffusion lens, and the diffusion lens is configured to diffuse the divergence angle of the second emission assembly to a second angle range. Optionally, the radio frequency signal emitted by the second emitting source 210 is a conical beam with a divergence angle of 10° to 15° and a conical beam with a second angle in a range of 80° to 100°. For example, the divergence angle of the radio frequency signal emitted by the second emitting source 210 is a conical beam of 10°, and when the radio frequency signal is diffused by the third lens 221 and enters the second incident surface, the divergence angle of the radio frequency signal is a conical beam of 90°. Through the diffusion of the fourth lens 222, the divergence angle of the radio frequency signal is increased as a whole. Then, when the radio frequency signal passes through the second protruding part of the strip-shaped structure, the divergence angle in the vertical direction is almost unchanged and is still 90°, and the divergence angle in the horizontal direction is increased, thereby forming a horizontal light field with a wide divergence angle, for example, 90° to 180°.

According to the emitting apparatus 10 of the present disclosure, by providing the third lens 221, the radio frequency signal emitted by the second emitting source 210 forms a horizontal light field with a wide divergence angle by means of the second protruding part. Before the radio frequency signal passes through the third lens 221, the radio frequency signal is allowed to diverge on the second protruding part by means of the fourth lens 222. The strip-shaped second protruding part extends in the vertical direction, such that the radio frequency signal emitted by the second emitting source 210 does not diverge in the vertical direction, but only diverges in the horizontal direction.

In the present disclosure, by combining the first emission assembly and the second emission assembly, the light field distribution in which the wide horizontal light field cooperates with the narrow vertical light field is formed, ensuring that the self-propelled device 600 can simultaneously achieve a high-efficiency and high-accuracy identification and return-to-dock, and complete functions such as charging, dust collection, and water replenishment.

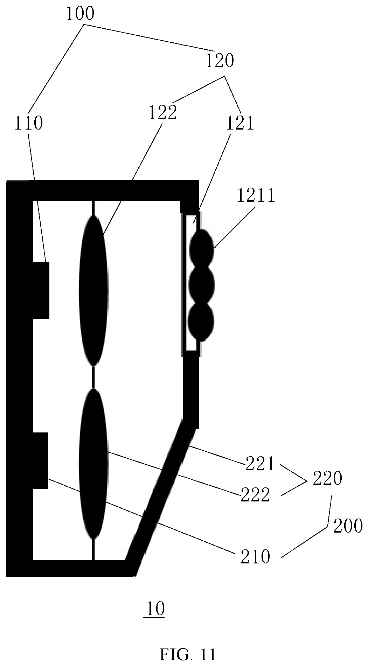

FIG. 11 shows a schematic diagram of an emitting apparatus according to some other embodiments of the present disclosure. As shown in FIG. 11, in some embodiments, an included angle between the third lens 121 and a center line of an emitted light beam of the second emitting source is 60° to 90°. Generally, the maintenance station 700 is disposed on the ground, the self-propelled device 600 is also at a relatively low height, and the third lens 121 is inclined downward relative to the center line of the emitted light beam of the second emitting source, thereby ensuring that the self-propelled device 600 can acquire signals near the ground. Therefore, the included angle is inclined downward to be closer to the viewing angle of the self-propelled device 600, so as to irradiate the ground.

In some embodiments, the first surface is substantially a vertical surface. In some examples, the second surface is substantially a horizontal surface. Specifically, the first surface is substantially parallel to the vertical direction, and the first surface is substantially perpendicular to the horizontal direction. In some embodiments, the second surface is substantially perpendicular to the vertical direction, and the second surface is substantially parallel to the horizontal direction. For example, when the self-propelled device 600 needs to return to the maintenance station 700, the first emission assembly 100 emits a radio frequency signal, and the radio frequency signal basically only diverges directly forward along the first surface; the second emission assembly 200 emits a radio frequency signal, and the radio frequency signal diverges directly forward in a relatively wide direction of the second surface. When the receiving apparatus on the self-propelled device 600 receives the radio frequency signal emitted by the second emission assembly 200, the position of the maintenance station 700 may be determined based on the position of the signal, and thus, a high-precision return-to-dock is achieved through the vertical light field with a narrow divergence angle.

According to one embodiment of the present disclosure, in another aspect, a receiving apparatus is provided. The receiving apparatus may be assembled to a self-propelled device 600, a cleaning robot, a service robot, an entertainment robot, and other robots in various forms. This embodiment is described by taking the self-propelled device 600 as an example, which is not limited herein. For example, the receiving apparatus is assembled to the self-propelled device 600, and the receiving apparatus is configured to receive the radio frequency signal of the emitting apparatus according to any one of the above embodiments, so as to achieve the return to the dock based on the state of the received video signal.

In some embodiments, the receiving apparatus may include: a first receiver, the first receiver being configured to receive radio frequency signals of the first emission assembly 100 and the second emission assembly 200; a second receiver, the second receiver being configured to receive the radio frequency signals of the first emission assembly 100 and the second emission assembly 200; and a controller, the controller being separately connected to the first receiver and the second receiver, and the controller being configured to control the self-propelled device 600 to adjust an orientation based on a state of the first receiver and the second receiver receiving the radio frequency signals.

In some embodiments, the first receiver and the second receiver are disposed in the horizontal direction. Certainly, the first receiver and the second receiver may also be disposed in the vertical direction, which is not limited herein. The following is described by taking the first receiver and the second receiver being disposed in the horizontal direction as an example.

In some embodiments, the controller being configured to control the self-propelled device 600 to adjust the orientation based on the state of the first receiver and the second receiver receiving the radio frequency signals includes: the controller controlling, in response to the first receiver receiving the radio frequency signals of the first emission assembly 100 and the second emission assembly 200 and the second receiver receiving the radio frequency signals of the first emission assembly 100 and the second emission assembly 200, the self-propelled device 600 to move toward the maintenance station 700 along a straight line. In some embodiments, the controller controls, in response to the first receiver receiving the radio frequency signals of the first emission assembly 100 and the second emission assembly 200 and the second receiver receiving the radio frequency signal of the second emission assembly 200, the self-propelled device 600 to move toward a direction of the first receiver. In some embodiments, the controller controls, in response to the first receiver receiving the radio frequency signal of the second emission assembly 200 and the second receiver receiving the radio frequency signals of the first emission assembly 100 and the second emission assembly 200, the self-propelled device 600 to move toward a direction of the second receiver. In some embodiments, the controller controls, in response to the first receiver not receiving the radio frequency signal of the second emission assembly 200 and the second receiver not receiving the radio frequency signal of the second emission assembly 200, the self-propelled device 600 to adjust the orientation and search for the radio frequency signal.

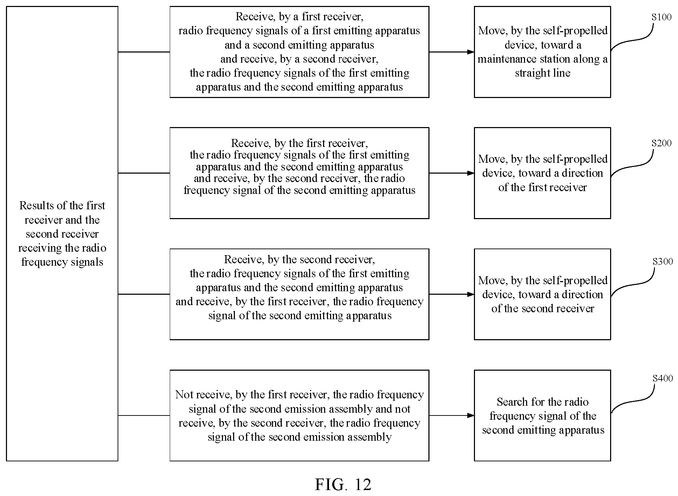

FIG. 12 shows a flowchart of an orientation adjustment method for a self-propelled device 600 according to some embodiments of the present disclosure. As shown in FIG. 12, according to one embodiment of the present disclosure, in yet another aspect, an orientation adjustment method is provided. By using the emitting apparatus 10 according to any one of the above embodiments and the receiving apparatus according to any one of the above embodiments, the self-propelled device 600 is controlled to adjust the orientation based on the state of the receiving apparatus receiving the radio frequency signal.

In some embodiments, the receiving apparatus may include: a first receiver, the first receiver being configured to receive radio frequency signals of the first emission assembly and the second emission assembly; and a second receiver, the second receiver being configured to receive the radio frequency signals of the first emission assembly and the second emission assembly.

The orientation adjustment method may include:
In S100, in response to the first receiver receiving the radio frequency signals of the first emission assembly 100 and the second emission assembly 200 and the second receiver receiving the radio frequency signals of the first emission assembly 100 and the second emission assembly 200, the self-propelled device 600 is controlled to move toward the maintenance station 700 along a straight line.

In step S100, the first receiver and the second receiver can receive the radio frequency signals of the first emission assembly 100 and the second emission assembly 200 at the same time, which proves that the self-propelled device 600 has been aligned with the maintenance station 700, such that the self-propelled device 600 can accurately enter the maintenance station 700 by moving toward the maintenance station 700 along the straight line.

It should be noted that during the process of the self-propelled device 600 moving toward the maintenance station 700 along the straight line, the closer the distance between the self-propelled device 600 and the maintenance station 700 is, the smaller the included angle of the first emission assembly 100 in the horizontal direction is, that is, the narrower the width of the first emission assembly 100 in the horizontal direction is. The situations of steps S200 and S300 may occur, and in this case, the steps S200 and S300 may be performed.

In S200, in response to the first receiver receiving the radio frequency signals of the first emission assembly 100 and the second emission assembly 200 and the second receiver receiving the radio frequency signal of the second emission assembly 200, the self-propelled device 600 is controlled to move toward the direction of the first receiver.

In step S200, the first receiver can receive the radio frequency signals of the first emission assembly 100 and the second emission assembly 200, and the second receiver can receive only the radio frequency signal of the second emission assembly 200, which proves that the self-propelled device 600 is deviated toward the direction of the second receiver. Therefore, the self-propelled device 600 needs to move toward the direction of the first receiver.

In S300, in response to the first receiver receiving the radio frequency signal of the second emission assembly 200 and the second receiver receiving the radio frequency signals of the first emission assembly 100 and the second emission assembly 200, the self-propelled device 600 is controlled to move toward the direction of the second receiver.

In step S300, the first receiver can receive only the radio frequency signal of the second emission assembly 200, and the second receiver can receive the radio frequency signals of the first emission assembly 100 and the second emission assembly 200 at the same time, which proves that the self-propelled device 600 is deviated toward the direction of the first receiver. Therefore, the self-propelled device 600 needs to move toward the direction of the second receiver.

In S400, in response to the first receiver not receiving the radio frequency signal of the second emission assembly 200 and the second receiver not receiving the radio frequency signal of the second emission assembly 200, the self-propelled device 600 is controlled to adjust the orientation and search for the radio frequency signal.

In step S400, the first receiver and the second receiver both receive the radio frequency signal of the second emission assembly 200, which proves that the self-propelled device 600 is not within the receiving range of the first receiver and the second receiver. Therefore, it is necessary to search for the radio frequency signal.

In some embodiments, the first receiver and the second receiver are disposed in the horizontal direction.

According to one embodiment of the present disclosure, in yet another aspect, a self-propelled device 600 is provided. The self-propelled device may include: the receiving apparatus according to any one of the above embodiments. The receiving apparatus is configured to receive a radio frequency signal emitted by the maintenance station 700.

According to one embodiment of the present disclosure, in yet another aspect, a maintenance station 700 is provided. The maintenance station may include: the emitting apparatus 10 according to any one of the above embodiments. The emitting apparatus 10 is configured to emit a radio frequency signal to the self-propelled device 600.

According to one embodiment of the present disclosure, in yet another aspect, an automatic cleaning system is provided. The automatic cleaning system may include: the self-propelled device 600 according to any one of the above embodiments and the maintenance station 700 according to any one of the above embodiments. Specifically, the self-propelled device 600 may include the receiving apparatus according to any one of the above embodiments; the maintenance station 700 is configured to provide a maintenance function for the self-propelled device 600, and the maintenance station 700 may include the emitting apparatus 10 according to any one of the above embodiments.

The present disclosure aims to protect an emitting apparatus 10, a receiving apparatus, an orientation adjustment method, a self-propelled device 600, a maintenance station 700, and an automatic cleaning system. The emitting apparatus 10 is configured to be assembled to the maintenance station 700 and emit a radio frequency signal. The emitting apparatus may include: a first emission assembly 100, the first emission assembly 100 including: a first emitting source 110 and a first optical assembly 120, and the first optical assembly 120 being configured to enable the first emitting source 110 to have a radio frequency signal with a first included angle on a first surface; and a second emission assembly 200, the second emission assembly 200 including: a second emitting source 210 and a second optical assembly 220, and the second optical assembly 220 being configured to enable the second emitting source 210 to have a radio frequency signal with a second included angle on a second surface; where the first surface is substantially perpendicular to the second surface. The emitting apparatus 10 of the present disclosure achieves one horizontal light field with a wide divergence angle and one vertical light field with a narrow divergence angle by means of two sets of emitting apparatuses 10, i.e., the first emission assembly 100 and the second emission assembly 200. Therefore, the self-propelled device 600 can quickly locate the orientation of the maintenance station 700 by following the horizontal light field with a wide divergence angle, and then achieve high-precision return-to-dock by following the vertical light field with a narrow divergence angle.

It should be understood that the above embodiments of the present disclosure are only used to exemplarily illustrate or explain the principles of the present disclosure, and do not constitute a limitation on the present disclosure. Therefore, any modification, equivalent substitution, improvement, or the like made without departing from the spirit and scope of the present disclosure shall fall within the protection scope of the present disclosure. Furthermore, the appended claims of the present disclosure are intended to encompass all changes and modifications that fall within the scope and boundaries of the appended claims, or equivalents of such scope and boundaries.

## Claims

1. An emitting apparatus, configured to be assembled to a maintenance station and emit a radio frequency signal, comprising:
a first emission assembly, the first emission assembly comprising a first emitting source and a first optical assembly, and the first optical assembly being configured to enable the first emitting source to have a radio frequency signal with a first included angle on a first surface; and
a second emission assembly, the second emission assembly comprising a second emitting source and a second optical assembly, and the second optical assembly being configured to enable the second emitting source to have a radio frequency signal with a second included angle on a second surface;
wherein the first surface is substantially perpendicular to the second surface.

2. The emitting apparatus according to claim 1, wherein the first optical assembly comprises:
a first lens, the first lens being provided with a first incident surface and a first exit surface, the first incident surface being a surface, close to the first emitting source, of the first lens, and the first exit surface being a surface, away from the first emitting source, of the first lens; and the first lens being configured to increase a divergence angle, on the first surface, of a radio frequency signal emitted by the first emitting source.

3. The emitting apparatus according to claim 2, wherein
the first incident surface is provided with a first protruding part, the first protruding part is of a strip-shaped structure, and a length direction of the strip-shaped structure is substantially perpendicular to the first surface.

4. The emitting apparatus according to claim 3, wherein
the first protruding part is of a semi-circular structure, and a height direction of the semi-circular structure is consistent with the length direction of the strip-shaped structure.

5. The emitting apparatus according to claim 4, wherein
a plurality of first protruding parts are provided, and the plurality of first protruding parts are substantially distributed in parallel.

6. The emitting apparatus according to any one of claims 2 to 5, wherein the first optical assembly further comprises:
a second lens, the second lens being disposed between the first emitting source and the first lens, and the second lens being configured to focus the radio frequency signal emitted by the first emitting source on the first incident surface.

7. The emitting apparatus according to claim 6, wherein
the second lens is a focusing lens, and the focusing lens is configured to compress a divergence angle of the first emission assembly to a first angle range.

8. The emitting apparatus according to any one of claims 1 to 7, wherein the second optical assembly comprises:
a third lens, the third lens being provided with a second incident surface and a second exit surface, the second incident surface being a surface, close to the second emitting source, of the third lens, and the second exit surface being a surface, away from the second emitting source, of the third lens; and the third lens being configured to increase a divergence angle, on the second surface, of a radio frequency signal emitted by the second emitting source.

9. The emitting apparatus according to claim 8, wherein
the second incident surface is provided with a second protruding part, the second protruding part is of a strip-shaped structure, and a length direction of the strip-shaped structure is substantially perpendicular to the second surface.

10. The emitting apparatus according to claim 9, wherein
the second protruding part is of a semi-circular structure, and a height direction of the semi-circular structure is consistent with the length direction of the strip-shaped structure.

11. The emitting apparatus according to claim 10, wherein
a plurality of second protruding parts are provided, and the plurality of second protruding parts are substantially distributed in parallel.

12. The emitting apparatus according to any one of claims 9 to 11, wherein the second optical assembly further comprises:
a fourth lens, the fourth lens being disposed between the second emitting source and the third lens, and the fourth lens being configured to diffuse the radio frequency signal emitted by the second emitting source.

13. The emitting apparatus according to claim 12, wherein
the fourth lens is a diffusion lens, and the diffusion lens is configured to diffuse a divergence angle of the second emission assembly to a second angle range.

14. The emitting apparatus according to any one of claims 8 to 13, wherein
an included angle between a plane in which the third lens is located and a center line of an emitted light beam of the second emitting source is 60° to 90°.

15. The emitting apparatus according to any one of claims 1 to 14, wherein
the first surface is substantially a vertical surface; and
the second surface is substantially a horizontal surface.

16. The emitting apparatus according to any one of claims 1 to 15, wherein
a size of the first included angle is 90° to 180°; and
a size of the second included angle is 90° to 180°.

17. The emitting apparatus according to any one of claims 1 to 16, wherein
the first emitting source has a radio frequency signal with a third included angle on the second surface, and the third included angle is less than the first included angle; and/or
the second emitting source has a radio frequency signal with a fourth included angle on the first surface, and the fourth included angle is less than the second included angle.

18. The emitting apparatus according to any one of claims 1 to 17, wherein
the first emitting source is a vertical-cavity surface-emitting laser; and/or
the second emitting source is a vertical-cavity surface-emitting laser.

19. A receiving apparatus, configured to be assembled to a self-propelled device, wherein the receiving apparatus is configured to receive the radio frequency signal of the emitting apparatus according to any one of claims 1 to 18.

20. An orientation adjustment method, comprising: controlling, by using the emitting apparatus according to any one of claims 1 to 18 and the receiving apparatus according to claim 19, a self-propelled device to adjust an orientation based on a state of the receiving apparatus receiving a radio frequency signal.

21. The orientation adjustment method according to claim 20, wherein the receiving apparatus comprises: a first receiver, the first receiver being configured to receive radio frequency signals of a first emission assembly and a second emission assembly; and a second receiver, the second receiver being configured to receive the radio frequency signals of the first emission assembly and the second emission assembly; the orientation adjustment method comprises:
controlling, in response to the first receiver receiving the radio frequency signals of the first emission assembly and the second emission assembly and the second receiver receiving the radio frequency signals of the first emission assembly and the second emission assembly, the self-propelled device to move toward a maintenance station along a straight line; and/or
controlling, in response to the first receiver receiving the radio frequency signals of the first emission assembly and the second emission assembly and the second receiver receiving the radio frequency signal of the second emission assembly, the self-propelled device to move toward a direction of the first receiver; and/or
controlling, in response to the first receiver receiving the radio frequency signal of the second emission assembly and the second receiver receiving the radio frequency signals of the first emission assembly and the second emission assembly, the self-propelled device to move toward a direction of the second receiver; and/or
controlling, in response to the first receiver not receiving the radio frequency signal of the second emission assembly and the second receiver not receiving the radio frequency signal of the second emission assembly, the self-propelled device to adjust the orientation and search for the radio frequency signal of the second emission assembly.

22. The orientation adjustment method according to claim 21, wherein
the first receiver and the second receiver are disposed in a horizontal direction.

23. A self-propelled device, comprising: the receiving apparatus according to claim 19.

24. A maintenance station, comprising: the emitting apparatus according to any one of claims 1 to 18.

25. An automatic cleaning system, comprising: the self-propelled device according to claim 23 and the maintenance station according to claim 24.
